# EUROPÄISCHE PATENTANMELDUNG

(11) **EP 1 156 228 A2**
(43) Veröffentlichungstag der Anmeldung: **21.11.2001**
(21) Anmeldenummer: 01111515.1
(22) Anmeldetag: 11.05.2001
(51) Int. Cl.: F16D 1/08

(54) **Pumpe**

(30) Priorität: 18.05.2000 DE 10024669
(71) Anmelder: Hella KG Hueck & Co., 59552 Lippstadt (DE)
(72) Erfinder: Hüser, Theodor, 59590 Geseke (DE); Müller, Ralf, 59597 Bad Westernkotten (DE); Schubert, Udo, 33106 Paderborn (DE)

(57) **Zusammenfassung**

Die Erfindung betrifft eine Pumpe, insbesondere Flügelzellenpumpe (1) in Kraftfahrzeugen, mit einer sich an eine elektrische Antriebseinheit (2) anschließenden Pumpenkammer, in der ein Rotor (5) konzentrisch zu einer Antriebswelle (3) der elektrischen Antriebseinheit angeordnet ist, dass die Antriebswelle über einen drehfest mit derselben verbundenen Mitnehmer (4) mit dem Rotor in Eingriff steht, wobei der Mitnehmer in einer Rotorausnehmung (18) eingreift, wobei der Mitnehmer und die korrespondierende Rotorausnehmung ausschließlich quer zu einer Längsachse der Antriebswelle orientiert sind.

## Beschreibung

Die Erfindung betrifft eine Pumpe, insbesondere Flügelzellenpumpe in Kraftfahrzeugen, mit einer sich an eine elektrische Antriebseinheit anschließenden Pumpenkammer, in der ein Rotor konzentrisch zu einer Antriebswelle der elektrischen Antriebseinheit angeordnet ist, dass die Antriebswelle über einen drehfest mit derselben verbundenen Mitnehmer mit dem Rotor in Eingriff steht, wobei der Mitnehmer in einer Rotorausnehmung eingreift.

Aus der DE 39 30 734 A1 ist eine Pumpe mit einem durch eine Antriebswelle einer elektrischen Antriebseinheit angetriebenen Rotor bekannt, wobei ein Mitnehmer drehfest mit der Antriebswelle verbunden ist. Der Mitnehmer hat einen hakenförmigen Verlauf, wobei er in radialer Richtung von der Antriebswelle abragt und in eine axial verlaufende Rotorausnehmung eingreift.

Nachteilig an der bekannten Pumpe ist, dass wegen eines infolge von Fertigungsungenauigkeiten stets vorhandenen axialen Winkelversatzes zwischen der Antriebswelle einerseits und des Rotors andererseits eine Verformung des Mitnehmers eintritt, die einen ungünstigen Einfluss auf die Lebensdauer der Pumpe hat. Mit fortdauernder Pumpenlaufzeit erstreckt sich die Anlagefläche zwischen dem Mitnehmer und der Rotorausnehmung nicht mehr parallel zur Längsachse der Antriebswelle. Es wirken auf den Rotor Axialkräfte, die zu einem Höhenverschleiß an einer Stirnfläche desselben führen.

Aufgabe der vorliegenden Erfindung ist es, eine Pumpe derart weiterzubilden, dass der Verschleiß bzw. die Abnutzung des Rotors verringert und damit die Lebensdauer der Pumpe erhöht wird.

Zur Lösung dieser Aufgabe ist die Erfindung dadurch gekennzeichnet, dass der Mitnehmer und die korrespondierende Rotorausnehmung ausschließlich quer zu einer Längsachse der Antriebswelle orientiert sind.

Der besondere Vorteil der Erfindung besteht zum einen in einer Verschleißminimierung des Rotors und zum anderen in einem gleichmäßigeren Pumpenlauf; so dass die Lebensdauer der Pumpe erheblich vergrößert werden kann (um das Zwei- bis Dreifache). Durch die Anordnung des Mitnehmers ausschließlich in Querrichtung zur Längsachse der Antriebswelle erfolgt eine geringere Verformung desselben. Die gleichwohl auftretende Verformung des Mitnehmers ist im Wesentlichen in Umfangsrichtung gerichtet, so dass die Krafteinleitung des Mitnehmers auf den Rotor im Wesentlichen axialkraftfrei erfolgt. Eine unerwünschte Axialverschiebung des Rotors kann hierdurch wesentlich reduziert werden, so dass der infolge des axialen Winkelversatzes bewirkte Rotorhöhenverschleiß relativ gering ist.

Vorteilhaft wird durch die erfindungsgemäße Lage des Mitnehmers relativ zu der elektrischen Antriebseinheit, dass der Drehmomentenverlauf über den Drehwinkel gezielt eingesetzt werden kann. Der Drehmomentenbedarf der Pumpe über den Drehwinkel kann auf das Drehmomenten-Drehwinkel-Angebot des Motors abgestimmt werden, so dass energetisch die Leistungsübertragung günstiger ist und ein ruhigerer Pumpenlauf erzielt wird (geringere Drehzahlschwankungen bzw. Drehwinkelschwingungen).

Nach einer bevorzugten Ausführungsform der Erfindung ist der Mitnehmer als Querstift ausgebildet, der in einer Querbohrung der Antriebswelle gelagert ist. Die Querbohrung bildet mit einer Längsachse der Antriebswelle eine gemeinsame Ebene und bewirkt zusammen mit dem bezüglich einer Längsmittelebene symmetrisch aufgebauten Rotor eine symmetrische Massenverteilung. Das dynamische Drehverhalten der Pumpe kann somit verbessert werden (geringe dynamische Unwucht).

Nach einer alternativen Ausführungsform kann die Querausnehmung der Antriebswelle als Querschlitz ausgebildet sein, der in Verbindung mit einer auf die Antriebswelle aufsteckbaren und mit Aussparungen versehenen Hülse derart zusammenwirkt, dass der Querstift in der vorgesehenen Position gehalten ist. Diese Ausbildung des Querschlitzes ist fertigungstechnisch einfacher herstellbar.

Nach einer Weiterbildung der Erfindung weist die Antriebswelle oder der Rotor in Höhe der Querausnehmung bzw. der Rotorausnehmung einen erhabenen Umfangsabsatz auf, so dass eine definierte Lagerung des Rotors auf der Antriebswelle gegeben ist. Der axiale Winkelversatz zwischen dem Rotor und der Antriebswelle kann hierdurch begrenzt werden.

Durch die erfindungsgemäße Anordnung des Mitnehmers kann eine Glättung der Drehzahlschwankungen bzw. Schwingungen erzielt werden, was sich schalldämpfend auswirkt.

Zwei Ausführungsbeispiele der Erfindung werden nachfolgend anhand der Zeichnungen näher erläutert.

Es zeigen:
- Figur 1: eine Vorderansicht einer Pumpe ohne Gehäuseabdeckung mit einem Mitnehmer nach einem ersten Ausführungsbeispiel,
- Figur 2: einen Längsschnitt durch die Pumpe entlang der Linie II-II in Figur 1,
- Figur 3: einen Längsschnitt durch die Pumpe entlang der Linie III-III in Figur 1,
- Figur 4: eine Einzelheit in Figur 3 in vergrößerter Darstellung,
- Figur 5: eine Explosionsdarstellung einer Rotor-Antriebswelleverbindung mit einem Mitnehmer nach einem zweiten Ausführungsbeispiel und
- Figur 6: einen Längsschnitt durch die montierte Antriebswelle-Rotoreinheit gemäß Figur 5.

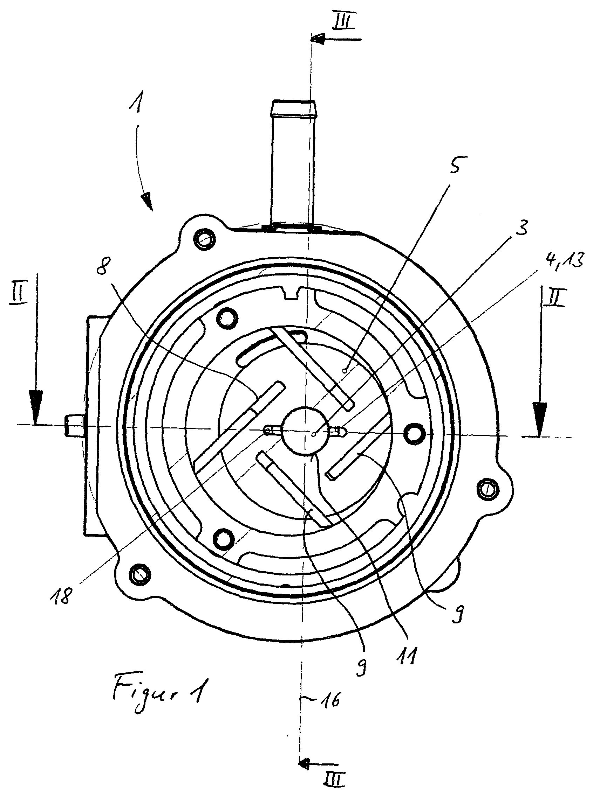

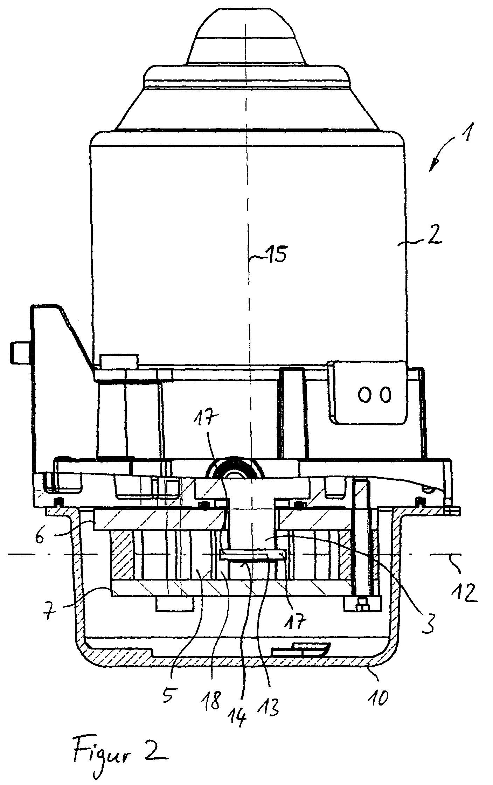

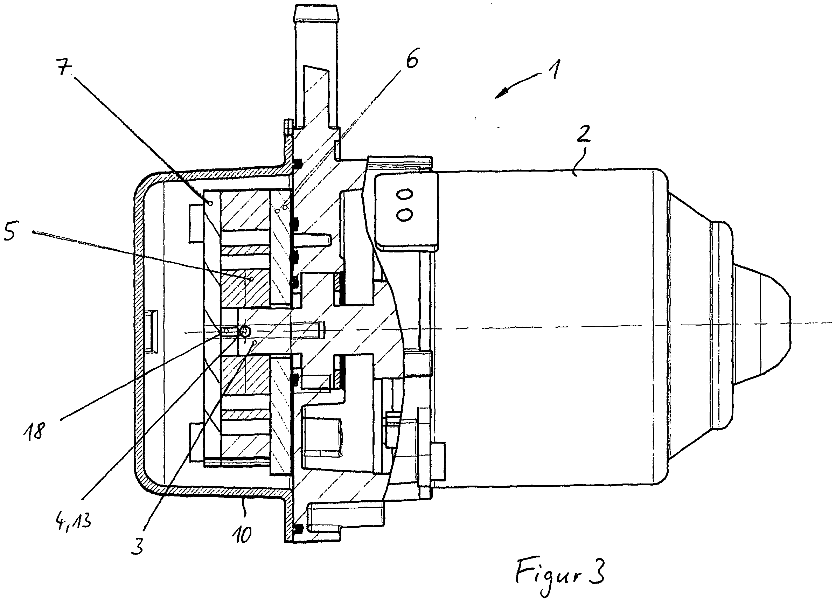

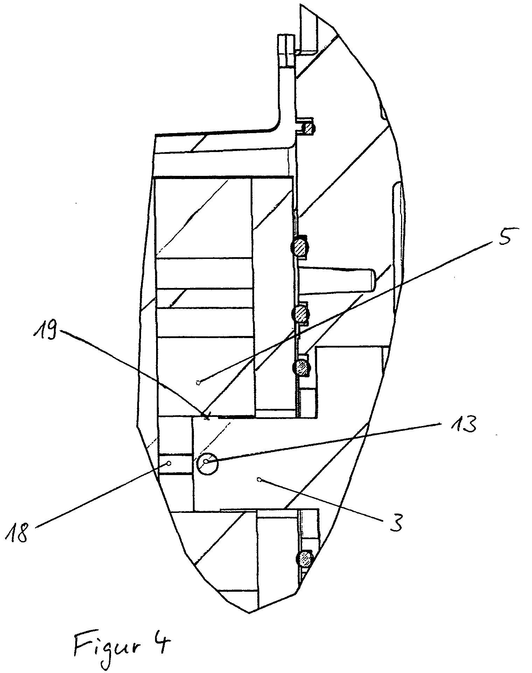

Eine in Figur 1 bis 4 dargestellte Pumpe ist als Flügelzellenpumpe 1 ausgebildet, die in Kraftfahrzeugen zur Verstärkung von Bremskraftzylindern eingesetzt wird.

Die Flügelzellenpumpe 1 besteht aus einer elektrischen Antriebseinheit, insbesondere einem elektrischen Motor, der über eine Antriebswelle 3 und einen Mitnehmer 4 mit einem Rotor 5 wirkverbunden ist.

Der Rotor 5 ist zwischen einer motorseitigen Grundplatte 6 und einer axial versetzten Abdeckplatte 7 eingespannt. Die Grundplatte 6 weist eine zentrale Bohrung auf, in der ein Endbereich der Antriebswelle 3 geführt ist. Der durch die Grundplatte 6 und die Abdeckplatte 7 begrenzte Raum bildet eine Pumpenkammer, in die ein flüssiges Medium (Öl) zu- und abgeführt wird. Der Rotor 5 weist in Umfangsrichtung vier verteilt angeordnete Schlitze 8 auf, in die jeweils Flügel 9 eingreifen und in Abhängigkeit von der Drehlage unterschiedlich große Zellen bilden.

Auf einer der elektrischen Antriebseinheit 2 abgewandten Seite ist die Pumpenkammer durch eine Gehäuseabdeckung 10 abgedeckt. Der Rotor 5 ist im Wesentlichen scheibenförmig ausgebildet und weist eine zentrale Bohrung 11 auf, in die ein Ende der Antriebswelle 3 soweit eingreift, dass der drehfest mit der Antriebswelle 3 verbundene Mitnehmer 4 in einer Quermittelebene 12 des Rotors 5 positioniert ist. Der Mitnehmer ist als Querstift 13 ausgebildet, der in einer als Querbohrung 14 ausgebildeten Querausnehmung der Antriebswelle 3 geführt ist. Der Querstift 13 erstreckt sich senkrecht zu einer Längsachse 15 der Antriebswelle 3 und schneidet dieselbe mittig. Der Querstift 13 ist symmetrisch zu einer Längsmittelebene 16 der Antriebswelle ausgerichtet, wobei gegenüberliegende Endabschnitte 17 des Querstiftes 13 jeweils in eine radiale Rotorausnehmung 18 eingreifen. Die Rotorausnehmungen 18 schließen sich jeweils unmittelbar in radialer Richtung an die zentrale Bohrung 11 an und sind mit ihrer Länge auf die Länge der Endabschnitte 17 abgestimmt. Die Rotorausnehmungen 18 sind symmetrisch zu der Längsmittelebene 16 ausgebildet. Sie erstrekken sich in axialer Richtung durchgehend, so dass infolge eines durch Fertigungsungenauigkeiten axialen Winkelversatzes zwischen dem Rotor 5 und der Antriebswelle 3 auftretende Axialkräfte aufgenommen werden können. Die Rotorausnehmungen 18 erstrecken sich somit rinnenförmig in axialer Richtung, wobei die Breite der Rinne auf die Dicke der Querstifte 13 abgestimmt ist.

Zur Erzeugung einer definierten Relativlage des Rotors 5 zu der Antriebswelle 3 weist der Rotor im Bereich der Quermittelebene 12 einen erhabenen Umfangsabsatz 19 auf, mittels dessen eine vorgegebene Spielpassung des Rotors 5 auf der Antriebswelle 3 gegeben ist.

Vorzugsweise ist der Querstift 13 mit einer flexiblen Beschichtung versehen, oder besteht statt aus Metall vollständig aus einem Kunststoffmaterial, so dass einer Abnutzung desselben entgegengewirkt wird.

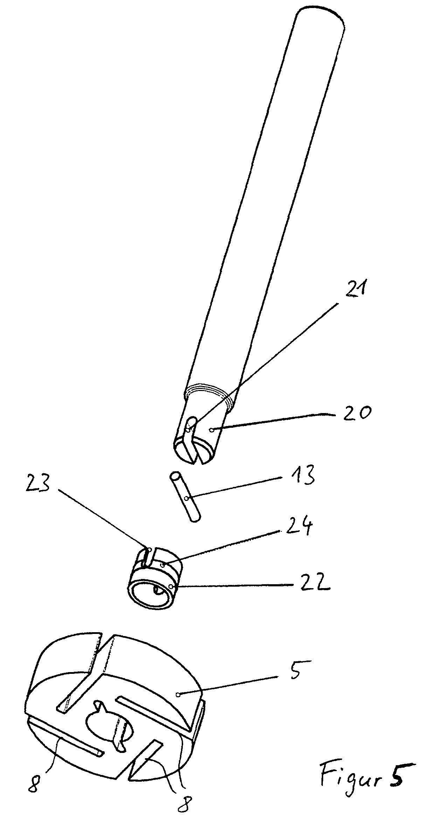

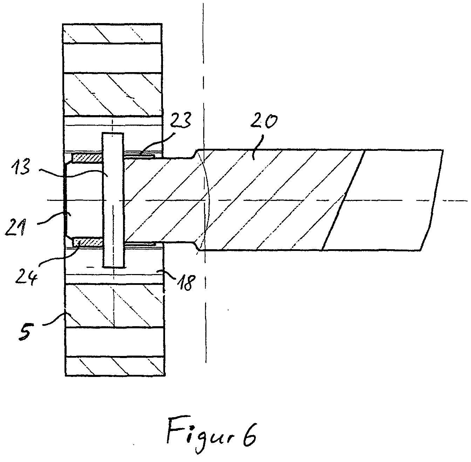

Nach einer alternativen Ausführungsform gemäß Figuren 5 und 6 kann im Unterschied zu dem vorhergehenden Ausführungsbeispiel eine Antriebswelle 20 vorgesehen sein, die einen Querschlitz 21 aufweist, dessen Breite an den Durchmesser des Querstiftes 13 angepasst ist. Zum Festlegen des Querstiftes 13 in dem Querschlitz 21 ist eine Hülse 22 vorgesehen, die axiale Aussparungen 23 aufweist und derart pressend auf das Ende der Antriebswelle 20 aufgesetzt wird, dass die Aussparung 23 zu den Querschlitzen 21 der Antriebswelle 20 fluchten. Die Aussparungen 23 im zusammengesetzten Zustand erstreckt sich der Querstift 13 in einer im Querschnitt langlochartigen Querausnehmung, wobei ein dem Rotor 5 zugewandtes Ende der Querausnehmung einen erhabenen Umfangsabsatz 24 der Hülse 22 durchbricht. In diesem Endbereich der Querausnehmung befindet sich die vorgesehen Position des Querstiftes 13, wobei er wie im vorausgehenden Ausführungsbeispiel sich in der Quermittelebene des Rotors 5 erstreckt.

## Patentansprüche

1. Pumpe, insbesondere Flügelzellenpumpe in Kraftfahrzeugen, mit einer sich an eine elektrische Antriebseinheit anschließenden Pumpenkammer, in der ein Rotor konzentrisch zu einer Antriebswelle der elektrischen Antriebseinheit angeordnet ist, dass die Antriebswelle über einen drehfest mit derselben verbundenen Mitnehmer mit dem Rotor in Eingriff steht, wobei der Mitnehmer in einer Rotorausnehmung eingreift, **dadurch gekennzeichnet, dass** der Mitnehmer (4) und die korrespondierende Rotorausnehmung (18) ausschließlich quer zu einer Längsachse (15) der Antriebswelle (3, 20) orientiert sind.

2. Pumpe nach Anspruch 1, **dadurch gekennzeichnet, dass** sich der Mitnehmer (4) und die Rotorausnehmung (18) radial zu der Längsachse (15) der Antriebswelle (3, 20) erstrecken.

3. Pumpe nach Anspruch 1 oder 2, **dadurch gekennzeichnet, dass** sich die Rotorausnehmung (18) unmittelbar an eine die Antriebswelle (3, 20) aufnehmende zentrale Bohrung (11) des Rotors (5) anschließt, wobei die Rotorausnehmung (18) in axialer Richtung durchgehend ausgebildet ist.

4. Pumpe nach einem der Anspruch 1 bis 3, **dadurch gekennzeichnet, dass** der Mitnehmer (4) als Querstift (13) ausgebildet ist, der symmetrisch zu einer Längsmittelebene (16) der Antriebswelle (3) in einer Querausnehmung der Antriebswelle (3) gelagert ist.

5. Pumpe nach einem der Ansprüche 1 bis 4, **dadurch gekennzeichnet, dass** ein Paar von sich in einer gemeinsamen Quermittelebene (12) erstreckenden radialen Rotorausnehmungen (18) vorgesehen sind.

6. Pumpe nach einem der Ansprüche 1 bis 5, **dadurch gekennzeichnet, dass** die Querausnehmung der Antriebswelle (3) als eine Querbohrung (14) ausgebildet ist, in der der Querstift (13) mit Spielfassung geführt ist.

7. Pumpe nach Anspruch 6, **dadurch gekennzeichnet, dass** die Querbohrung (14) in einem solchen Abschnitt der Antriebswelle (3) angeordnet ist, dass der Querstift (13) in der Quermittelebene (12) des Rotors (5) zur Anlage an eine Innenwandung der radialen Rotorausnehmung (18) kommt.

8. Pumpe nach einem der Ansprüche 1 bis 5, **dadurch gekennzeichnet, dass** die Querausnehmung als Querschlitz (21) ausgebildet ist, dessen Breite zu dem Durchmesser des Querstiftes (13) ausgerichtet ist, und dass eine mit gegenüberliegenden Aussparungen (23) versehen Hülse (22) derart pressend auf die Antriebswelle (20) aufsetzbar ist, dass der Querstift (13) in axialer Richtung verschiebbar gelagert ist.

9. Pumpe nach einem der Ansprüche 1 bis 8, **dadurch gekennzeichnet, dass** die Antriebswelle (3, 20) oder der Rotor (5) in Höhe der Querausnehmung (14, 21) bzw. der Rotorausnehmung (18) einen in radialer Richtung erhabenen Umfangsabsatz (19, 24) aufweisen zur Ausrichtung der axialen Lage der Antriebswelle (3, 20) bezogen zu dem Rotor (5).

10. Pumpe nach einem der Ansprüche 1 bis 9, **dadurch gekennzeichnet, dass** der Querstift (13) aus einem Metallwerkstoff oder aus einem Metallwerkstoff mit flexibler Beschichtung der aus einem Kunststoffmaterial besteht.
